# DEMANDE DE BREVET EUROPEEN

(11) **EP 2 165 888 A1**
(43) Date de publication de la demande: **24.03.2010**
(21) Numéro de dépôt: 09170645.7
(22) Date de dépôt: 18.09.2009
(51) Int. Cl.: B60R 7/04, B60R 13/02

(54) **Module de rangement pour custode de véhicule automobile**

(30) Priorité: 23.09.2008 FR 0856374
(71) Demandeur: Peugeot Citroën Automobiles SA, 78140 Vélizy-Villacoublay (FR)
(72) Inventeur: Launay, Christian, 92220, BAGNEUX (FR)

(57) **Abrégé**

Module de rangement pour custode de véhicule automobile, ladite custode étant recouverte d'un élément de garnissage 7 composé d'un panneau rigide 8 sur lequel est fixée une garniture extérieure (9, 10).

Le module est constitué d'un fond 12 ménagé dans le panneau rigide 8, d'un couvercle 13 articulé sur le bord inférieur du fond 12 et d'au moins un moyen de retenue et de maintien latéral 14 fixé d'un côté sur ledit fond et de l'autre sur le couvercle de façon à permettre l'ouverture dudit couvercle d'un angle (α) suffisant pour accueillir et maintenir en place les objets à ranger.

Il est situé, de préférence, à proximité d'une prise d'alimentation d'appareils électriques et sert à ranger les accessoires et appareils multimédia utilisés à bord du véhicule.

## Description

L'invention concerne les aménagements intérieurs des véhicules automobiles permettant le rangement des objets personnels des passagers.

L'amélioration du confort intérieur des véhicules et de leur praticité pour un usage familial a conduit à aménager un certain nombre d'espaces de rangement à l'intérieur de l'habitacle.

L'espace disponible pour cet usage étant souvent restreint, ces rangements ne sont pas toujours très accessibles. D'autre part, le développement actuel de l'utilisation des appareils multimédia dans les véhicules augmente les besoins de rangement de ces appareils et de leurs accessoires, en particulier à destination des passagers des places arrière et donc dans la partie arrière de l'habitacle.

Le but de l'invention est donc de proposer un espace de rangement complémentaire implanté dans un emplacement facilement accessible pour les occupants des places arrières et, notamment, à proximité des prises électriques d'alimentation des appareils multimédia.

A cet effet, la présente invention a pour objet un module de rangement pour custode de véhicule automobile, ladite custode étant recouverte d'un élément de garnissage composé d'un panneau rigide sur lequel est fixée une garniture extérieure.

Pour ce faire, le module est constitué d'un fond ménagé dans le panneau rigide, d'un couvercle articulé sur le bord inférieur du fond et d'au moins un moyen de retenue et de maintien latéral fixé d'un côté sur ledit fond et de l'autre sur le couvercle de façon à permettre l'ouverture dudit couvercle d'un angle suffisant pour accueillir et maintenir en place les objets à ranger.

Selon d'autres caractéristiques avantageuses de l'invention :
- Selon un mode de réalisation le fond présente une forme concave en direction de l'intérieur du véhicule.
- Le moyen de retenue est un système élastique rappelant le couvercle en position fermée.
- Le couvercle est recouvert par la même garniture que le reste du panneau rigide.
- le couvercle comporte un moyen de préhension au milieu de son bord supérieur.
- Le module est situé à proximité d'une prise d'alimentation d'appareils électriques.
- En variante, une prise électrique est installée dans le fond du module.
- Au moins un système d'accrochage et/ou de retenu des objets est prévu à l'intérieur du module.

D'autres caractéristiques et avantages de l'invention apparaîtront clairement à la lecture de la description ci-après, donnée à titre indicatif en référence aux dessins annexés dans lesquels :
- La figure 1 est une vue d'un côté de l'habitacle arrière d'un véhicule automobile
- La figure 2 est une vue en coupe selon l'axe XX de la figure 1.
- La figure 3 est une vue analogue à la figure 2 d'une variante de réalisation.

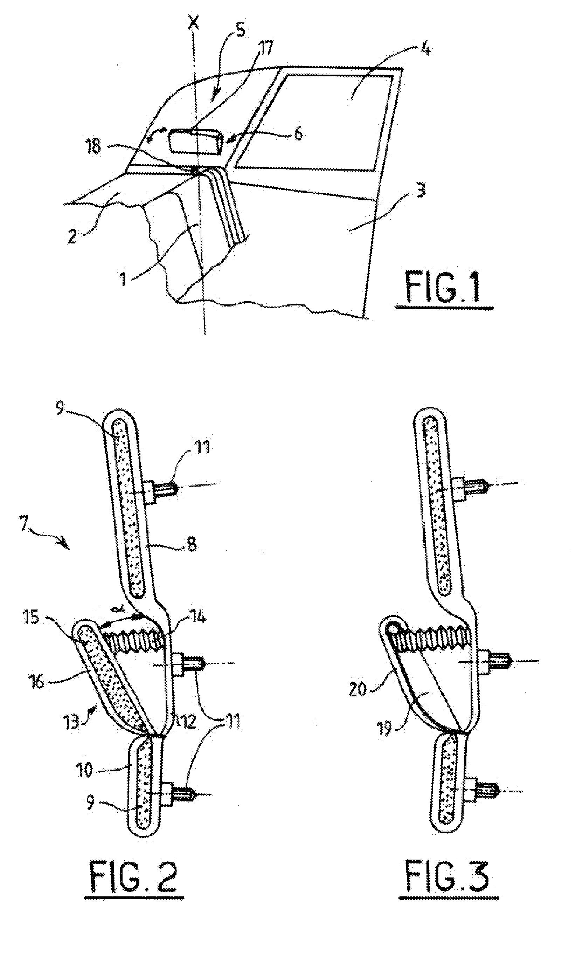

Sur la figure 1 on a représenté une vue partielle d'un habitacle de véhicule automobile sur laquelle on voit un siège arrière 1, la tablette arrière 2, un panneau de porte 3 muni d'une vitre 4 et prolongé par une custode 5.

Conformément à l'invention, un module de rangement 6 est intégré à ladite custode.

Ce rangement est ménagé dans l'élément de garnissage 7 de la custode. L'élément de garnissage est composé d'un panneau rigide 8 sur lequel est fixée une garniture formée, par exemple, de mousse 9 recouverte d'un revêtement 10 en textile, plastique, cuir ou autre. Le panneau 8 est en outre muni sur sa face arrière de moyens de fixation 11 à la custode 5.

Une partie du panneau rigide 8 présente une forme concave en direction de l'intérieur du véhicule qui constitue le fond 12 d'un logement. Celui-ci est fermé par une plaque formant couvercle 13 articulé sur le bord inférieur du fond 12, par exemple par une charnière classique ou une charnière film.

Le fond 12 et le couvercle 13 composent ainsi le module de rangement 6 permettant d'abriter, en position fermée du couvercle de petits objets tels que des accessoires d'appareils multimédia : téléphone, console de jeux, lecteur de disques vidéo ou autre.

En outre, le couvercle 13 peut occuper une position ouverte selon laquelle il fait un angle α avec le fond 12 du module et dans laquelle il est retenu par un moyen, tel qu'une sangle élastique 14 ou un soufflet fixé entre le fond 12 et au moins l'un des bords latéraux du couvercle 13. Ce moyen de retenu permet également le maintien latéral des objets. Dans cette position, le module 6 peut accueillir des objets plus importants, par exemple les appareils multimédia précités.

Avantageusement, le moyen élastique de retenu permet le rappel en position fermée du couvercle.

Le couvercle 13 est recouvert par la même garniture que le reste du panneau 8, une mousse 15 et un revêtement 16. De sorte que, lorsqu'il est fermé, sa surface extérieure est sensiblement coplanaire avec celle du reste de l'élément de garnissage 7 de la custode.

Le couvercle 13 comporte, au milieu de son bord supérieur, une échancrure 17 pour sa préhension. En variante, celle-ci pourrait être assurée, par exemple, par une languette fixée également au milieu de son bord supérieur et faisant saillie entre les deux partie de la garniture, lorsque le couvercle est fermé.

On ajoutera que, avantageusement, le module de rangement est situé à proximité d'une prise 18 permettant d'alimenter les appareils électriques.

Dans un mode de réalisation, ladite prise électrique est installée dans le fond 12 du module.

A l'intérieur du module, des systèmes d'accrochage et/ou de retenu des objets peuvent être prévus crochets, filets, élastiques..

Bien entendu, l'invention n'est pas limitée au mode de réalisation que l'on vient de décrire. C'est ainsi, par exemple, que le couvercle 19 du module peut ne pas comporter de mousse de garnissage (figure 3) il présente alors une forme concave occupant le volume de la mousse et augmentant de ce fait sa contenance interne, ce qui permet le rangement d'objets plus volumineux. Dans ce mode de réalisation, le couvercle n'est donc recouvert que du revêtement externe 20 du panneau de garnissage de la custode.

Dans une autre variante, le fond du module se trouve dans le plan du panneau rigide 8, le volume de rangement étant, dans ce cas, tout entier constitué par le couvercle en position d'ouverture.

Il est évident, également, que, sans sortir du cadre de l'invention, si l'on veut augmenter encore le volume du module en position fermée, on peut augmenter la concavité du couvercle en faisant saillir celui-ci au-dessus de la surface du panneau de garnissage.

Le module de rangement que l'on vient de décrire est applicable à tous les types de véhicules possédant des custodes, il est réalisable en différentes dimensions et format.

On comprendra aussi qu'un même panneau de garnissage peut comporter plusieurs modules de rangement ou bien que le panneau de garnissage de chacune des custodes peut être muni d'un ou plusieurs modules.

## Revendications

1. Module de rangement pour custode (5) de véhicule automobile, ladite custode étant recouverte d'un élément de garnissage (7) composé d'un panneau rigide (8) sur lequel est fixée une garniture extérieure (9, 10),
**caractérisé en ce qu'**il est constitué d'un fond (12) ménagé dans le panneau rigide (8), d'un couvercle (13) articulé sur le bord inférieur du fond (12) et d'au moins un moyen de retenue et de maintien latéral (14) fixé d'un côté sur ledit fond et de l'autre sur le couvercle de façon à permettre l'ouverture dudit couvercle d'un angle (α) suffisant pour accueillir et maintenir en place les objets à ranger.

2. Module de rangement selon la revendication 1 ,
**caractérisé en ce que** le fond (12) présente une forme concave en direction de l'intérieur du véhicule.

3. Module de rangement selon la revendication 1 ou 2,
**caractérisé en ce que** le moyen de retenue est un système élastique rappelant le couvercle en position fermée.

4. Module de rangement selon l'une des revendications précédentes,
**caractérisé en ce que** le couvercle (13) est recouvert par la même garniture que le reste du panneau (8).

5. Module de rangement selon l'une des revendications précédentes,
**caractérisé en ce que** le couvercle (13) comporte un moyen de préhension au milieu de son bord supérieur.

6. Module de rangement selon l'une des revendications précédentes,
**caractérisé en ce qu'**il est situé à proximité d'une prise (18) d'alimentation d'appareils électriques.

7. Module de rangement selon l'une des revendications précédentes,
**caractérisé en ce qu'**une prise électrique est installée dans le fond (12) du module.

8. Module de rangement selon l'une des revendications précédentes,
**caractérisé en ce qu'**au moins un système d'accrochage et/ou de retenu des objets est prévu à l'intérieur du module.
